Europäisches Patentamt

European Patent Office

Office européen des brevets

(19)

(11) Numéro de publication: **0 292 389 B1**

(12) **FASCICULE DE BREVET EUROPEEN**

(45) Date de publication du fascicule du brevet:
**04.04.90**

(51) Int. Cl.⁴: **F16L 3/22**

(21) Numéro de dépôt: **88401212.1**

(22) Date de dépôt: **19.05.88**

(54) **Perfectionnements aux gouttières profilées en U et à leurs procédés de fabrication.**

(30) Priorité: **22.05.87 FR 8707223**

(43) Date de publication de la demande:
**23.11.88 Bulletin 88/47**

(45) Mention de la délivrance du brevet:
**04.04.90 Bulletin 90/14**

(84) Etats contractants désignés:
**AT BE CH DE ES GB GR IT LI LU NL SE**

(56) Documents cités:
**EP-A- 0 014 732**
**EP-A- 0 031 863**
**DE-A- 2 103 952**
**FR-A- 2 044 101**
**GB-A- 2 069 895**
**GB-A- 2 159 669**
**US-A- 3 521 843**

(73) Titulaire: **CONSTRUCTIONS ELECTRIQUES DE LA SEINE, 26 Rue Jean-Baptiste Potin, F-92130 Issy les Molineaux(FR)**

(72) Inventeur: **Launay, Guy, Rue Haute Semur-en-Vallon, F-72390 Dollon(FR)**

(74) Mandataire: **Behaghel, Pierre et al, CABINET PLASSERAUD 84 rue d'Amsterdam, F-75009 Paris(FR)**

ACTORUM AG

## Description

L'invention est relative aux gouttières métalliques profilées en U, que celles-ci soient constituées d'une feuille unique repliée en U ou de deux cornières latérales en L réunies entre elles par des traverses.

Elle vise plus particulièrement, parmi ces gouttières, celles dont les bords des ailes sont renforcés par repliement de ces bords tel que décrit dans DE-A 2 103 952.

Elle vise plus particulièrement encore, parce que c'est dans leur cas que son application semble devoir offrir le plus d'intérêt, mais non exclusivement, parmi ces gouttières, les "chemins de câbles" qui sont constitués par des tôles perforées et qui servent à guider et à supporter des câbles.

Elle a pour but, surtout, d'augmenter la résistance à la flexion longitudinale des gouttières du genre en question, ce qui permet notamment de réduire l'épaisseur de la tôle constitutive de ces gouttières pour des performances mécaniques données de celles-ci, toutes choses égales par ailleurs.

A cet effet les gouttières du genre en question selon l'invention sont essentiellement caractérisées en ce que le bord libre de chaque aile est rabattu autour d'un fil ou rond métallique de diamètre compris entre 2 et 10 mm, limites incluses, en emprisonnant ce fil.

Dans des modes de réalisation préférés, on a recours en outre à l'une et/ou à l'autre des dispositions suivantes :
- le diamètre du fil est compris entre 2 et 3 mm,
- l'épaisseur de la tôle constitutive de la gouttière est comprise entre 0,5 et 0,7 mm,
- la hauteur de chaque aile armée d'un fil est inférieure à 60 mm, étant de préférence comprise entre 30 et 40 mm,
- le fil est constitué en acier galvanisé,
- le fil est constitué en acier inoxydable,
- le fil est constitué en alliage d'aluminium,
- pour renforcer par un fil, de la manière indiquée ci-dessus, le bord libre d'une aile d'une gouttière profilée en U, on rabat progressivement ce bord contre ce fil en faisant défiler longitudinalement en continu l'ensemble de ces deux éléments juxtaposés latéralement dans une profileuse à galets.

L'invention comprend, mises à part ces dispositions principales, certaines autres dispositions qui s'utilisent de préférence en même temps et dont il sera plus explicitement question ci-après.

Dans ce qui suit l'on va décrire un mode de réalisation préféré de l'invention en se référant au dessin ci-annexé d'une manière bien entendu non limitative.

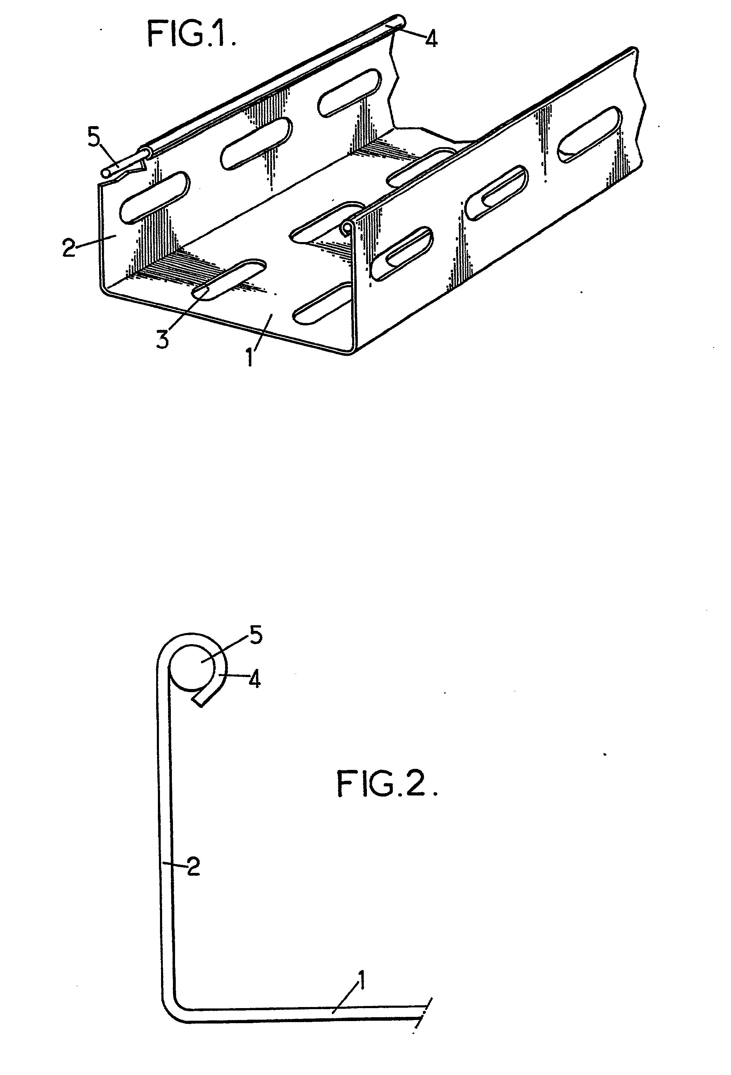

La figure 1, de ce dessin, montre en vue perspective, portions arrachées, une gouttière établie selon l'invention.

La figure 2 est une vue en bout partielle de cette gouttière à échelle agrandie.

La section droite de la gouttière considérée présente la forme générale d'un U, cette gouttière comprenant un fond horizontal 1 bordé par deux ailes verticales parallèles 2 présentant en général la même hauteur.

Le fond 1 et les ailes 2 sont évidés par des suites longitudinales de perforations 3 allongées longitudinalement.

Dans le cas préféré où la gouttière sert de "chemin de câbles" ou de "gouttière de câblage", elle est constituée par une tôle métallique mince, notamment en acier galvanisé, acier inoxydable ou alliage d'aluminium, l'épaisseur de cette tôle étant généralement comprise entre 0,5 et 2 mm.

Le bord supérieur de chaque aile est épaissi et renforcé par rabattement du rebord 4 de cette aile.

Mais au lieu d'être rabattu directement sur lui-même, comme dans les réalisations connues, ce rebord 4 est ici rabattu autour d'un fil ou rond rigide 5.

Ce rabattement est effectué à plus de 180° de façon telle qu'à la fin de celui-ci le fil soit totalement emprisonné à l'intérieur du bord rabattu : ce dernier se présente alors sous la forme d'une portion de tube cylindrique s'étendant généralement sur un arc comprise entre 190 et 270°.

La présence du fil 5 présente un double avantage:
- en premier lieu ce fil sert de gabarit propre à guider le rabattement du rebord 4, ce qui permet de conférer au rebord rabattu la forme régulière d'un tube à section partiellement circulaire, forme qui présente la résistance mécanique optimum au flambage,
- en second lieu, ledit fil se trouve coincé et serré à la fin du rabattement à l'intérieur du tube formé par le rebord rabattu et fait alors corps avec ce tube : il constitue une armature métallique de la gouttière en renforçant considérablement sa résistance mécanique, notamment aux flexions longitudinales.

L'importance du renforcement assuré par la simple présence des fils d'armature 5 est surprenante.

L'expérience a ainsi montré que la résistance à la flexion longitudinale d'une gouttière ainsi armée était accrue dans une proportion supérieure à 20 % pour des natures et dimensions de tôle données ou, ce qui revient au même, que l'on pouvait réduire l'épaisseur du métal de plus de 20 % pour une résistance donnée de la gouttière.

Ce dernier avantage est particulièrement précieux dans la pratique du fait que, dans le domaine considéré des gouttières de câblage, le prix du métal intervient pour une part prépondérante --souvent de l'ordre de 65 %-- dans le prix de revient total.

On peut s'étonner de ce que, malgré un tel avantage, l'idée de l'invention n'ait pas été proposée plus tôt.

Il convient de rappeler à cet égard qu'il était connu de renforcer par des fils rigides les bords rabattus de certains seaux ou corbeilles métalliques.

Mais dans ce cas les bords concernés sont circulaires et leurs dimensions sont limitées : les fils d'armature se présentent sous la forme de cerceaux métalliques faciles à mettre en place à la main.

Il n'en est pas de même dans le cas des gouttières profilées ici concernées, lesquelles sont fabriquées en continu à grande vitesse par des machines automatisées.

Il n'était pas considéré comme possible avant l'invention d'introduir des fils rigides dans de telles machines à des fins d'armature de leurs rebords rabattus : les complications inhérentes à un tel perfectionnement étaient considérées comme hors de proportion avec les avantages à en attendre.

En particulier les techniques classiques de pliage des tôles ne se prêtent absolument pas à la mise en place de fils indépendants de ces tôles.

La demanderesse a découvert qu'une telle mise en place était aujourd'hui rendue possible, pour les diamètres de fil d'armature inférieurs ou égaux à 6 mm, par déroulement continu d'un tel fil d'armature le long de chacun des rebords à rabattre, notamment dans le cadre de l'utilisation de profileuses à galets permettant des fabrications de profilés en continu et à froid par déroulement des tôles à profiler à travers une sucession de jeux de galets.

A cet effet un fil déroulé en continu à partir d'une bobine est mis en place contre chacun des bords à armer d'une bande de tôle et défile conjointement avec cette dernière dans le train de galets d'une profileuse de façon telle que les bords en question soient rabattus autour desdits fils.

Le renforcement considéré des gouttières profilées en U par armature de leurs bords s'est révélé particulièrement avantageux pour les gammes de cotes suivantes :
- diamètre des fils compris entre 2 et 5 mm, de préférence entre 2 et 3 mm, limites incluses,
- épaisseur de la tôle comprise entre 0,5 et 0,7 mm, limites incluses,
- hauteur de chaque aile inférieure à 60 mm, de préférence comprise entre 30 et 40 mm, limites incluses.

Le matériau constitutif du fil est choisi en fonction de cellui constitutif de la tôle, ces deux matériaux étant de préférence identiques entre eux et constitués tous les deux notamment par de l'acier galvanisé, de l'acier inoxydable ou un alliage d'aluminium.

Le rabattement de chaque rebord 4 sur l'aile correspondante 2 peut être exécuté vers l'intérieur de gouttière, comme illustré, ou vers l'extérieur. Selon un mode de réalisation avantageux écartant à la fois les risques d'accrochage par les câbles à l'intérieur de la gouttière et les inconvénients dus aux saillies extérieures, le rabattement est exécuté vers l'extérieur et l'ensemble de la zone rabattue est légèrement décalé vers l'intérieur, étant raccordé au reste de l'aile par un tronçon d'aile profilé en S, de façon à être juste compris dans l'encombrement transversal normal de la gouttière.

En suite de quoi, et quel que soit le mode de réalisation adopté, on dispose finalement d'une gouttière métallique profilée en U dont la constitution et les avantages résultent suffisamment de ce qui précède.

## Revendications

1. Gouttière métallique profilée en U dont les bords (4) des ailes (2) sont renforcés par repliement de ces bords, caractérisée en ce que chaque repliement est effectué autour d'un fil ou rond métallique (5) de diamètre comprise entre 2 et 10 mm, limites incluses, de préférence entre 2 et 3 mm, de façon à emprisonner ce fil.

2. Gouttière selon la revendication 1, caractérisée en ce que l'épaisseur de la tôle qui la constitue est comprise entre 0,5 et 0,7 mm.

3. Gouttière selon l'une quelconque des précédentes revendications, caractérisée en ce que la hauteur de chaque aile (2) armée d'un fil (5) est inférieur à 60 mm, étant de préférence comprise entre 30 et 40mm.

4. Gouttière selon l'une quelconque des précédentes revendications, caractérisée en ce chaque fil (5) est constitué en acier galvanisé.

5. Gouttière selon l'une quelconque des revendications 1 à 3, caractérisée en ce que chaque fil (5) est constitué en acier inoxydable.

6. Gouttière selon l'une quelconque des revendications 1 à 3, caractérisée en ce que chaque fil (5) est constitué en alliage d'aluminium.

7. Procédé pour renforcer par un fil (5) le bord libre (4) d'une aile (2) d'une gouttière profilée en U, caractérisé en ce que l'on rabat progressivement ce bord contre ce fil en faisant-défiler longitudinalement en continu l'ensemble de ces deux éléments juxtaposés latéralement dans une profileuse à galets.

## Claims

1. A metallic channel of U-shaped cross section, of which the outer edges (4) of the side walls (2) are reinforced by curling the said outer edges, characterised in that each edge curl is formed around a round metallic wire (5) having a diameter in the inclusive range 2–10 mm, and preferably between 2 and 3 mm, whereby to enclose the said wire.

2. A channel according to Claim 1, characterised in that the thickness of the metal sheet of which it is made lies in the range 0.5 to 0.7 mm.

3. A channel according to either one of the preceding Claims, characterised in that the depth of each side wall (2) having a wire (5) is less than 60 mm, being preferably in the range 30 to 40 mm.

4. A channel according to any one of the preceding Claims, characterised in that each wire (5) is made of galvanized steel.

5. A channel according to any one of Claims 1 to 3, characterised in that each wire (5) is made of stainless steel.

6. A channel according to any one of Claims 1 to 3, characterised in that each wire (5) is made of aluminium alloy.

7. A method of reinforcing, by means of a wire (5), the free outer edge (4) of a side wall (2) of a channel of U-shaped cross section, characterised in that the said outer edge is upset progressively against the said wire, by causing these two elements, juxtaposed side by side, to pass together, in continuous movement, longitudinally through a roller type former.

## Patentansprüche

1. U-Profilrinne aus Metall, bei welcher die Ränder (4) der Schenkel (2) durch Umbördeln dieser Ränder verstärkt sind, dadurch gekennzeichnet, daß jede Bördelung um einen metallischen Draht oder ein metallisches Rundmaterial (5) mit einem Durchmesser erfolgt, der zwischen 2 und 10 mm beträgt, die Grenzwerte eingeschlossen, vorzugsweise zwischen 2 und 3 mm, um diesen Draht einzuschließen.

2. Rinne nach Anspruch 1, dadurch gekennzeichnet, daß die Dicke des Bleches, welches die Rinne bildet, zwischen 0,5 und 0,7 mm beträgt.

3. Rinne nach einem der vorhergehenden Ansprüche, dadurch gekennzeichnet, daß die Höhe jedes Schenkels (2), der mit einem Draht (5) armiert ist, kleiner als 60 mm ist, und vorzugsweise zwischen 30 und 40 mm beträgt.

4. Rinne nach einem der vorhergehenden Ansprüche, dadurch gekennzeichnet, daß jeder Draht (5) aus galvanisiertem Stahl besteht.

5. Rinne nach einem der Ansprüche 1 bis 3, dadurch gekennzeichnet, daß jeder Draht (5) aus rostfreiem Stahl besteht.

6. Rinne nach einem der Ansprüche 1 bis 3, dadurch gekennzeichnet, daß jeder Draht (5) aus einer Aluminiumlegierung besteht.

7. Verfahren zum Verstärken des freien Randes (4) eines Schenkels (2) einer U-Profilrinne durch einen Draht (5), dadurch gekennzeichnet, daß man diesen Rand fortschreitend gegen den Draht bördelt, indem die Anordnung aus diesen beiden seitlich benachbarten Elementen in der Längsrichtung kontinuierlich durch eine Rollenprofiliervorrichtung geführt wird.

FIG.1.

FIG.2.